# EUROPÄISCHE PATENTANMELDUNG

(11) **EP 2 645 539 A1**
(43) Veröffentlichungstag der Anmeldung: **02.10.2013**
(21) Anmeldenummer: 12161152.9
(22) Anmeldetag: 26.03.2012
(51) Int. Cl.: H02K 3/40

(54) **Wicklungslagen mit verschiedenen Materialien**

(71) Anmelder: Siemens Aktiengesellschaft, 80333 München (DE)
(72) Erfinder: Brockschmidt, Mario, 45131 Essen (DE); Gröppel, Peter, 91052 Erlangen (DE); Pohlmann, Friedhelm, 45355 Essen (DE); Rohr, Claus, 68219 Mannheim (DE); Röding, Roland, 99755 Ellrich (DE); Wirsing, Julia, 91443 Scheinfeld (DE)

(57) **Zusammenfassung**

Durch die Verwendung von hydrophoben elektrisch leitfähigen Materialien können weniger Isolationslagen verwendet werden.

## Beschreibung

Die Erfindung betrifft Wicklungsanlagen mit verschiedenen Materialien.

Eine Potentialsteuerung ermöglicht in rotierenden Maschinen, wie z.B. Generatoren oder Hochspannungsmotoren , die Minimierung elektrischer Spannungen (Potentialdifferenzen) wodurch das Auftreten von Teil- und/oder Glimmentladungen reduziert oder ganz vermieden werden können.

In rotierenden elektrischen Maschinen ist die Zuverlässigkeit des Isoliersystems maßgeblich für deren Betriebssicherheit verantwortlich. Das Isoliersystem hat die Aufgabe, elektrische Leiter (Drähte, Spulen, Stäbe) dauerhaft gegeneinander und gegen das Ständerblechpaket oder die Umgebung zu isolieren. Die Außenpotenzialsteuerung hat die Aufgabe, einen elektrischen Kontakt zwischen dem auf Erdpotenzial liegenden Ständerblechpaket und der Außenseite der Hauptisolierung zu realisieren. Dadurch wird sichergestellt, dass keine Teilentladungen in Hohlräumen im Bereich der Grenzschicht von Isolierung und Blechpaket auftreten.

Hierbei ist zu unterscheiden
● Außenglimmschutz (AGS) für Generatorwicklungsstäbe, die entsprechend Einzelstabfertigung hergestellt wurden (AGS-E)
● Außenglimmschutz (AGS) für Generatorwicklungsstäbe, die mittels GVPI-Prozess hergestellt wurden (AGS-G).

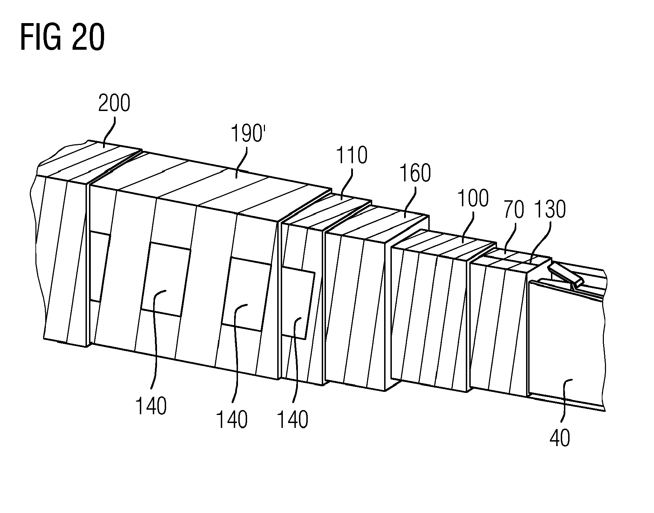

Bei ganzgetränkten Ständerwicklungen (Global Vacuum Pressure Impregnation GVPI) wird das gesamte Blechpaket mit einer vollständig eingebauten Wicklung gemeinsam getränkt und ausgehärtet. Dadurch ist die Verklebung der Wicklung in den Nuten des Blechpaketes so fest, dass es durch die die unterschiedlichen Ausdehnungskoeffizienten von Kupfer, Eisen und Isolierung zu hohen thermomechanischen Spannungen zwischen Kupfer, Isolierung und Eisen kommt, die nach einer gewissen Anzahl von Wärmespielen (Starts und Stopps des Generators) zum Aufreißen der Grenzflächen führen können. Um zu verhindern, dass die Spalte einer elektrischen Potentialdifferenz unter liegen und die dort zündenden Teilentladungen die Isolierung zerstören, wird eine Außenpotentialsteuerung (outer corona protection, OCP) eingesetzt, die in Figur 20 als doppellagiger Außenglimmschutz, wie er zur Potentialsteuerung mittels G-VPI prozessierter Maschinen eingesetzt wird, dargestellt ist.

Über den stromführenden Roebelstab aus Kupferteilleitern 40 wird ein isolierender Grundwickel 70 aus Feinglimmerband aufgebracht, der die Kantenradien der dünnen Kupferteilleiter 40 glättet und vergrößert. Hierüber wird ein erstes graphithaltiges Leitvliesband 100 gewickelt, das über einen Kontaktstreifen 130 an nur einer Stelle mit dem Hochspannungspotential des Kupferteilleiters 40 verbunden ist.

Erst darauf wird die Hauptisolierung 160 aus Feinglimmerglas gewickelt. Anstelle der Kupferteilleiter bildet nun das erste Leitvliesband 100 die Hochspannungselektrode. Es ist dauerhaft mit der Hauptisolierung verklebt. Auf der Hauptisolierung 160 folgt der innere Außenglimmschutzwickel 110 nach dem Stand der Technik, ein äußerstes Trennband 190' und ein äußerer Außenglimmschutzwickel 200. Ein Außenglimmschutzband 140, das im äußersten Trennband 190' verwoben ist, verbindet inneren 110 und äußeren 200 Außenglimmschutzwickel.

Die beim An- und Abfahren des Generators entstehenden thermomechanischen Spannungen zwischen dem Kupferleiterverband und der Isolierung können nach gewisser Betriebszeit zu lokalen Ablösungen der Isolierhülse vom Leiter führen, ohne dass in den entstehenden Spalten die gefürchteten Teilentladungen zünden. Der Bereich der Delamination ist potentialfrei, weil das Hochspannungspotential auf das an der Hauptisolierung fest backende Leitvlies übertragen wurde. Dieses IPS-Design an der hochbeanspruchten inneren Grenzfläche zwischen Leiter und Isolierung erlaubt einen jahrzehntelangen Spitzenlastbetrieb von Turbogeneratoren ohne eine merkliche Teilentladungsalterung

Es ist daher Aufgabe der Erfindung, o.g. Probleme zu lösen.

Die Aufgabe wird gelöst durch ein Isolationssystem gemäß Anspruch 1 für ein AGS-E einen Außenglimmschutz nach Anspruch 17 und eine elektrische Maschine gemäß Anspruch 18.

In den Unteransprüchen sind weitere vorteilhafte Maßnahmen aufgelistet, die beliebig miteinander kombiniert werden können, um weitere Vorteile zu erzielen.

Es zeigen:
- Figuren 1 bis 19: verschiedene Wicklungen,
- Figur 20: einen Außenglimmschutz.

Die Figuren und die Beschreibung stellen nur Ausführungsbeispiele der Erfindung dar.

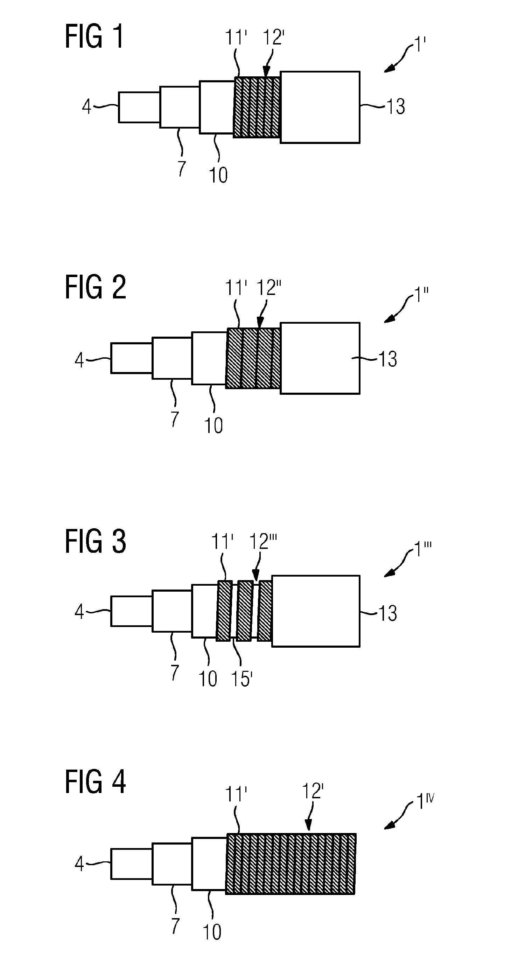

Figur 1 zeigt eine Isolierung 1' um einen metallischen Stab 4, die eine nicht näher dargestellte Hauptisolierung 7 inklusive Innenpotentialsteuerung (IPS) um den metallischen Stab 4 (oder metallischen Material) aufweist.

Die Hauptisolierung 7 ist vorzugsweise gewickelt und weist vorzugsweise Glimmer oder ein anderes bekanntes Material zur Isolation auf.

Auf der Hauptisolierung 7 ist eine weitere Lage 10 aus einem gut haftenden, elektrisch leitfähigen Material (vorzugsweise von der Firma Krempel) aus dem Stand der Technik vorhanden. Auf dieser Lage 10 ist ein elektrisch leitfähiges, hydrophobes Band 11' als Lage 12' aufgewickelt, wobei sich die Bänder 11' überlappen.

Das Material des Bands 11' unterscheidet sich also deutlich von den Materialien der Lagen 7, 10 oder 13.

Auf dieser Lage 12' ist wiederum ein gut haftendes, leitfähiges Wicklungsband zur Bildung der äußersten Lage 13 vorhanden, das das gleiche Material wie die Lage 10 aufweisen kann.

Im Unterschied zu Figur 1 ist in Figur 2 eine weitere Variante 1*''* des Isolationssystems abgebildet, bei der die Bänder 11' aneinander anstoßen, d. h., sich nicht in der so gebildeten Lage 12" überlappen.

Die Materialien für die Lage 12" sind vorzugsweise identisch mit der Lage 12'.

In Figur 3 ist eine weitere Variante 1*'''* des Isolationssystems gezeigt, bei der, ausgehend von Figur 2, die Bänder 11' einen Freiraum oder Abstand 15' zwischen einander aufweisen und die Lage 12*'''* bilden.

Die Materialien der Lagen 12", 12*'''* sind vorzugsweise identisch.

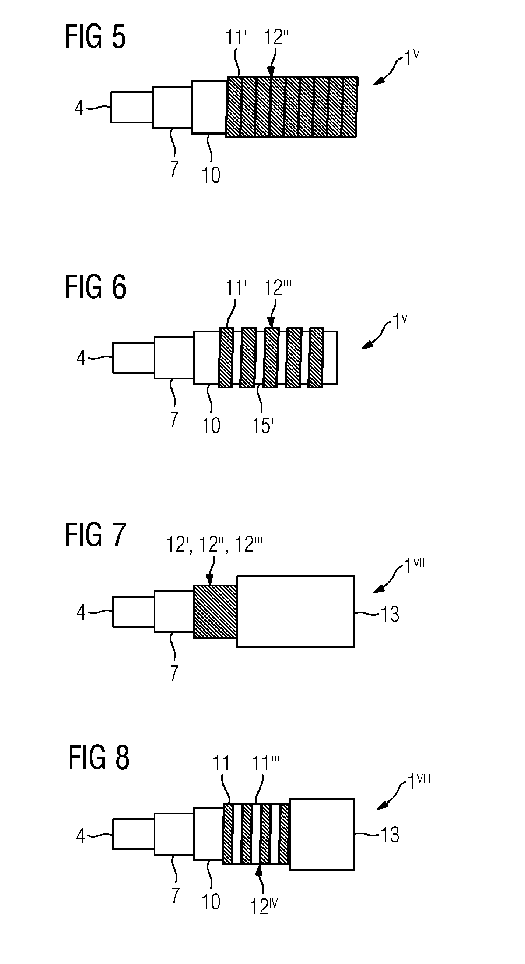

In Figur 4 ist eine weitere Isolierung 1^{IV} gezeigt, bei der um den metallischen Stab 4 eine Hauptisolierung 7 mit einem haftenden, elektrisch leitfähigen Material und einer weiteren Lage 10 ein Band 11' in überlappender Weise in der Lage 12' oder nur anstoßend (Figur 5, Lage 12", Isolierung 1^{V}) oder mit Freiraum 15' dazwischen (Figur 6, Lage 12"', Isolierung 1^{VI}) vorhanden ist. Dies entspricht den Ausführungsbeispielen gemäß Figuren 1 bis 3 ohne die äußere Lage 13, d.h. das elektrisch leitfähige, hydrophobe Material bildet die äußerste Lage.

In Figur 7 ist eine weitere Variante einer Isolierung 1^{VII} gezeigt.

Bei dieser Variante 1^{VII} ist auf der Hauptisolierung 7 direkt elektrisch leitfähiges, hydrophobes Material des Bandes 11' vorhanden, das die Lage 12', 12" oder 12*'''* bildet, um die eine gut haftende, elektrisch leitfähige Lage 13 vorhanden ist. Das entspricht den Figuren 1, 2 oder 3 ohne die Zwischenlage 10.

Figuren 8 bis 10 zeigen weitere Varianten des Isolationssystems 1^{VIII} bis 1^{X}_{.}

Ausgangspunkt ist bei den Figuren 8, 9 und 10 jeweils ein metallischer Stab 4, auf dem eine Hauptisolierung 7 vorhanden ist und ein gut haftendes, elektrisch leitfähiges Material als Lage 10 direkt darauf.

Auf dieser Lage 10 ist gemäß Figur 8 in einer Lage 12^{IV} sowohl ein Band 11^{III} aus gut haftendem, elektrisch leitfähigen Material und ein Band 11" (entspricht Band 11' (Fig. 1 - 7)) aus einem elektrisch leitfähigen, hydrophoben Material überlappend angeordnet. Die Bänder 11", 11''' überlappen sich.

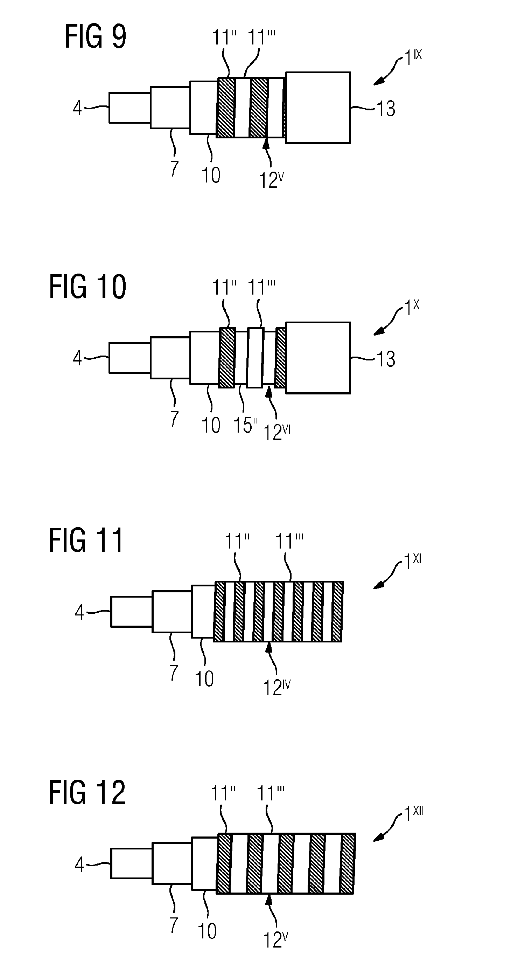

Gemäß der Ausführungsform der Lage 12^{V} in Figur 9, ausgehend von Figur 8, stoßen die Ränder der zwei verschiedenen Bänder 11'', 11''' aneinander an.

Die zwei Bänder (11", 11''') können ein Band bilden, d.h. sie weisen einen linken Rand als eine Hälfte aus elektrisch leitfähigem, gut haftendem Material und einen rechten Rand als die andere Hälfte aus einem elektrisch leitfähigen, hydrophoben Material auf.

Ebenso können die zwei Bänder 11", 11''' mit den unterschiedlichen Materialien mit einem Abstand 15" zueinander angeordnet (Figur 10) sein.

In Figur 11, 12, 13 sind weitere Varianten eines Isolationssystems 1^{XI} bis 1^{XIII} dargestellt.

Hier ist ausgehend von Figuren 8 bis 10 nur keine äußere Lage 13 vorhanden, d.h. das elektrisch leitfähige, hydrophobe Material bildet die äußerste Lage.

Die Materialien sind vorzugsweise identisch zu den der Figuren 8 - 10.

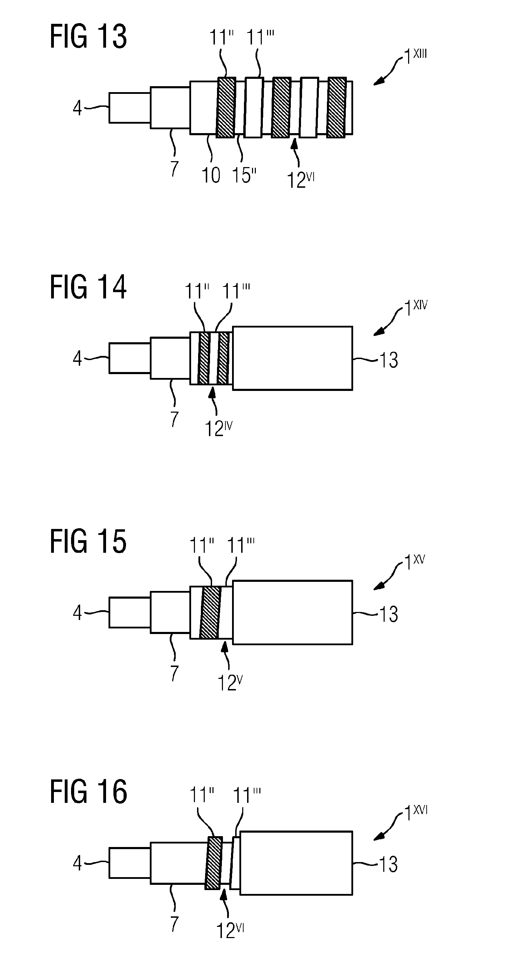

In Figur 14 ist eine weitere Variante eines Isolationssystems 1^{XIV} gezeigt, wobei auf der Hauptisolierung 7 zwei Bänder 11'', 11''' jeweils auf gut haftendem, leitfähigem Material 11''' und elektrisch leitfähigem, hydrophobem Material 11'' überlappend aufgewickelt sind.

Als äußerste Lage 13 ist ein Material aus einem gut haftenden, leitfähigen Material vorhanden.

In der Variante 1^{XV} gemäß Figur 15 sind die verschiedenen Bänder 11"', 11" mit ihren Rändern aneinander anstoßend oder mit einem Freiraum 15" zwischen einander (Figur 16) vorhanden.

Die Figuren 14 bis 16 entsprechen jeweils den Figuren 11 bis 13 ohne die Isolierung 10 auf der Hauptisolierung 7, aber mit einer äußeren Lage 13, d.h. das elektrisch leitfähige, hydrophobe Material bildet nicht die äußerste Lage.

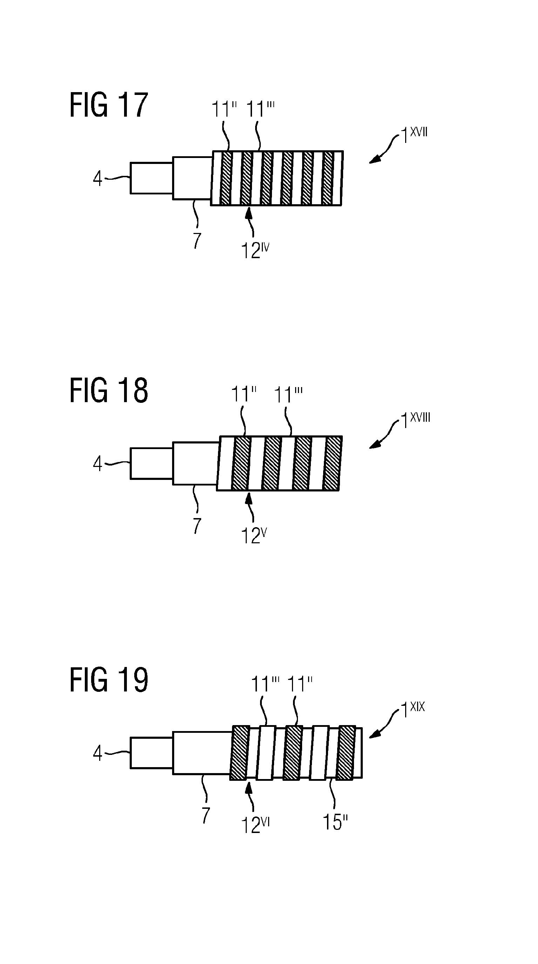

Figuren 17, 18, 19 zeigen weitere Varianten 1^{XVII} bis 1^{XIX}, bei denen, ausgehend von Figuren 14 bis 16, kein äußeres Material 13 aus einem gut haftenden, leitfähigen Material vorhanden ist, d.h. das elektrisch leitfähige, hydrophobe Material bildet die äußerste Lage. Die Materialien sind vorzugsweise identisch.

Die Auswahl die Anzahl der Lagen 10, 12, 13 bzw. das Hinzufügen der äußersten Lage 13 und/oder einer inneren Lage 10 mit einem Material aus dem Stand der Technik hängt von dem Einsatzgebiet der Isolierung ab, nämlich von der verwendeten Spannung (mehr Lagen) und von der äußeren Umgebung (äußerste Lage).

Die Erfindung besteht darin, dass man hydrophobes Material, insbesondere PTFE (Teflon) für die Isolationssysteme 1', ..., 1^{XIX}, in den Lagen 12' - 12^{VI}, insbesondere als Außenglimmschutz, ganz insbesondere für ein solches Hochspannungsisolationssystem verwendet, wobei der Außenglimmschutz lagenweise elektrisch leitfähig ausgestaltet wird.

Das Hochspannungsisolationssystem kann ein einfaches Systems oder ein komplexeres Systeme wie in Figur 20 sein.

Die Erfindung wird nur anhand von PTFE als ein Beispiel für ein hydrophobes Material erläutert.

Vorzugsweise wird schon das hydrophobe Material oder PTFE elektrisch leitfähig ausgestaltet. Das PTFE ist dann ein Kompositmaterial.

Dies erfolgt vorzugsweise bei der Herstellung des Materials mittels Einmischung von insbesondere Graphit mittels Extrusion bei der Herstellung, wobei dann vorzugsweise Fasern hergestellt werden. Es ist aber auch eine nachträgliche elektrische Beschichtung eines Gewebes, einer Faser, eines Gelages oder einer Folie möglich.

Das Gewebe wird vorzugsweise aus solchen Fasern gebildet.

Dieses Gewebe ist vorzugsweise in Bandform vorhanden und wird für die Anwendung auf die zu isolierende Fläche gewickelt (siehe Figur 20).

Vorzugsweise weist also der Außenglimmschutz Fasern oder ein Gewebe aus PTFE auf, wobei zur Erzielung der elektrischen Leitfähigkeit auch zwischen den das gewebebildenden Strukturen vorzugsweise ein elektrisch leitfähiges Material, vorzugsweise Graphit vorhanden ist.

Ebenso können ein das Band (Gewebe, Faser, Folie, Gelage) perforiert sein.

Die Isolierung gemäß den Figuren 1 bis 19 weist für den Außenglimmschutz vorzugsweise ein Gewebe aus PTFE auf, wobei dies so konstruiert ist, dass das Gewebe Poren aufweist, die wie oben nach dem beschriebenen Verfahren infiltriert werden können.

Dies ergibt folgende Vorteile:
● Gute Durchimprägnierbarkeit, da es sich um ein poröses Gewebe handelt und somit vor der Aushärtung appliziert werden kann.
● Unveränderter Widerstand vor und nach der Imprägnierung, da die Leitfähigkeit von Fasern herrührt und nicht von Partikeln wie beim AGS-Band. (Diese weisen aufgrund der nach der Imprägnierung die Partikel umhüllende Kunststoffmatrix einen anderen Widerstandswert im Vergleich zum Anfangswert auf).

Die Ziele für AGS-G sind:
● vereinfachte Applikation/Kostenreduktion
● reduzierte Schichtdicke des Doppel-AGS durch dünnere Alternative

Der Ansatz für AGS-G lautet:
● Reduktion der Schichtdicke durch Einsatz einer Trennschicht, die eine definierte mechanische Entkopplung realisiert, ohne dass es zur Veränderung des elektrischen Widerstandes kommt. Dies soll durch den Ersatz der doppelten Lage Spaltglimmer durch hydrophobe Gewebetypen realisiert werden. Dies kann insbesondere ein Teflongewebe sein. Der Aufbau erfolgt in der Weise:

Eine Verbesserung ergibt sich erfindungsgemäß durch den Einsatz von elektrisch leitfähigem Gewebe 190 aus PTFE, da dies die "Einflechtung" des Außenglimmschutzbands 140 (Fig. 20) unnötig macht und dadurch eine Reduktion der Schichtdicke und des Fertigungsaufwandes ermöglicht würde (Fig. 20).

Der erfindungsgemäße Aufbau einer innovativen Außenpotenzialsteuerung für den Einsatz im GVPI-Prozess ermöglicht ein Isolierungssystem, das in den Eigenschaften dem aktuellen Stand der Technik entspricht, aber die Vorzüge aufweist:
● Feststellung der TE-Freiheit nach der Aushärtung
● vergleichbare Verlustfaktoren nach Durchführung von Temperaturzyklentests zur beschleunigten thermomechanischen Belastung
● vergleichbare elektrische Dauerbeständigkeiten unter Betriebsspannungsbelastung und bei erhöhter Spannungsbelastung
● vergleichbare elektrische Dauerbeständigkeiten unter Betriebsspannungsbelastung und bei erhöhter Spannungsbelastung nach Auslagerung bei unterschiedlichen Temperaturzyklen.

Diese Untersuchungen wurden an Generatorwicklungsstäben mit folgendem Design durchgeführt:
● Aluminiumprofile mit einer Länge von ca. 1,5 m und Abmessungen von 1cm x 5cm
● Lagenzahl an Glimmer 10 + 1 Lage IPS für eine Nennspannung von 13,8kV
● Anzahl an Generatorwicklungsstäben pro Kollektiv: 6.

Dabei wurde eine Reduktion der Schichtdicke des aktuellen AGS von ca. 450µm auf einen Wert von ca. 100µm ermöglicht.

## Patentansprüche

1. Isolationssystem (1', _{...} 1^{XIX}),
bei dem auf einem metallischen Stab (4) und auf einer Hauptisolierung (7)
zumindest eine Lage (12', ..., 12^{VI}) ,
insbesondere nur eine Lage aus
aus einem elektrisch leitfähigen, hydrophoben Material (11', 11", 11''') und
optional eine weitere Lage (10) aus einem verschiedenen Material direkt auf der Hauptisolierung (7),
optional eine weitere äußerste Lage (13),
wobei insbesondere die weiteren Lagen (10, 13) ein elektrisch leitfähiges Material aufweisen,
das verschieden ist von dem elektrisch leitfähigen, hydrophoben Material (11', 11", 11''').

2. Isolationssystem nach Anspruch 1,
bei dem die Hauptisolierung (7) Glimmer als gut haftendes, elektrisch leitfähiges Material aufweist.

3. Isolationssystem nach einem oder beiden der Ansprüche 1 oder 2,
bei dem gut haftendes, elektrisch leitfähiges Material (10) direkt auf der Hauptisolierung (7) angeordnet ist.
(Fig. 1, 2, 3, 4, 5, 6, 8, 9, 10, 11, 12, 13)

4. Isolationssystem nach einem oder beiden der Ansprüche 1 oder 2,
bei dem hydrophobes Material (11', 11") direkt auf der Hauptisolierung (7) angeordnet ist,
insbesondere direkt auf der Hauptisolierung.
(Fig. 7, 14, 15, 16, 17, 18, 19)

5. Isolationssystem nach einem oder mehreren der Ansprüche 1, 2 oder 3,
bei dem zwischen der Lage (11', 11'') mit dem hydrophoben Material und der Hauptisolierung (7) eine weitere Lage (10) vorhanden ist,
insbesondere nur eine weitere Lage (10),
insbesondere nur Material aus gut haftendem, elektrisch leitfähigem Material vorhanden ist,
das verschieden ist von dem hydrophoben Material (11', 11'', 11''').
(Fig. 1, 2, 3, 4, 5, 6, 8, 9, 10, 11, 12, 13).

6. Isolationssystem nach einem oder mehreren der vorherigen Ansprüche,
bei dem als äußerste Isolierungslage (13) ein Material aus gut haftendem, elektrisch leitfähigem Material vorhanden ist,
insbesondere nur Material aus gut haftendem, elektrisch leitfähigem Material vorhanden ist,
das verschieden ist von dem hydrophoben Material (11', 11'', 11''').
(Fig. 1, 2, 3, 7, 8, 9, 10, 14, 15, 16)

7. Isolationssystem nach einem oder mehreren der vorherigen Ansprüche 1 bis 5,
bei dem eine Lage (12', 12'', 12''', 12^{IV}, 12^{V}, 12^{VI}) mit elektrisch leitfähigen, hydrophoben Material die äußerste Lage darstellt,
die insbesondere nur elektrisch leitfähiges, hydrophobes Material aufweist.
(Fig. 4, 5, 6, 11, 12, 13, 17, 18, 19)

8. Isolationssystem nach einem oder mehreren der vorherigen Ansprüche,
bei dem eine Lage (12^{IV}, 12^{V}, 12^{VI}) vorhanden ist,
in der sowohl gut haftendes, elektrisch leitfähiges Material (11''') und elektrisch leitfähiges, hydrophobes Material (11'') vorhanden ist.
(Fig. 8, 9, 10, 11, 12, 13, 14, 15, 16, 17, 18, 19)

9. Isolationssystem nach einem oder mehreren der vorherigen Ansprüche,
bei dem die Bänder (11', 11'', 11''') sich überlappen. (Fig. 1, 4, 7, 8, 11, 14, 17)

10. Isolationssystem nach einem oder mehreren der vorherigen Ansprüche,
bei dem die Ränder der Bänder (11', 11", 11''') aneinander anstoßen.
(Fig. 2, 5, 7, 9, 12, 15, 18)

11. Isolationssystem nach einem oder mehreren der vorherigen Ansprüche,
bei dem die Bänder (11', 11'', 11''') mit Abstand (15', 15'') zueinander angeordnet sind.
(Fig. 3, 6, 7, 10, 13, 16, 19)

12. Isolationssystem nach einem oder mehreren der vorherigen Ansprüche,
das nur vier Isolationslagen (7, 10, 12, 13) aufweist. (Fig. 1, 2, 3, 8, 9, 10)

13. Isolationssystem nach einem oder mehreren der Ansprüche, das nur drei Isolationslagen (7, 10, 12; 7, 12, 13) aufweist.
(Fig. 4, 5, 6, 7, 11, 12, 13, 14, 15, 16)

14. Isolationssystem nach einem oder mehreren der vorherigen Ansprüche,
das nur zwei Isolationslagen (7, 12) aufweist.
(Fig. 17, 18, 19) .

15. Isolationssystem nach einem oder mehreren der vorherigen Ansprüche,
das nur eine Lage (12', ... 12^{VI}) elektrisch leitfähiges, hydrophobes Material aufweist.
(alle Figuren)

16. Isolationssystem nach einem oder mehreren der vorherigen Ansprüche,
welches als elektrisch leitfähiges, hydrophobes Material PTFE aufweist.

17. Außenglimmschutz,
der ein Isolationssystem nach einem oder mehreren der vorherigen Ansprüche aufweist.

18. Elektrische Maschine,
insbesondere Generator,
die ein Isolationssystem nach einem oder mehreren der vorherigen Ansprüche aufweist.
